# EUROPEAN PATENT APPLICATION

(11) **EP 4 156 117 A1**
(43) Date of publication of application: **29.03.2023**
(21) Application number: 22194999.3
(22) Date of filing: 12.09.2022
(51) Int. Cl.: G06V 10/141, G06V 10/145, G06V 20/59, G06V 40/16, G06V 40/19, G06V 40/18

(54) **DETECTION SYSTEM**

(30) Priority: 13.09.2021 JP 2021148255
(71) Applicant: Yazaki Corporation, Minato-ku Tokyo 108-8333 (JP)
(72) Inventor: KOJIMA, Hiroki, Shizuoka, 410-1194 (JP); OTOMO, Kentaro, Shizuoka, 410-1194 (JP)
(74) Representative: Grünecker Patent- und Rechtsanwälte PartG mbB

(57) **Abstract**

In a detection system (1), an LED unit (LU) includes a plurality of LEDs, and each of the LEDs applies light toward a different part of an occupant's face in a vehicle. A position detection unit (22b) detects a position of a pupil in an occupant's eye on the basis of an image captured by an imaging unit (12b). The LED unit (LU) applies light from LEDs with a light emission pattern selected from a plurality of predetermined light emission patterns. The light emission patterns differ from each other in the combination of the LEDs that emit light and the LEDs that do not emit light in the LEDs. An operation controller (22d) controls the LED unit (LU) to detect the position of the pupil by applying light from the LEDs that emit light with a light emission pattern different from a current light emission pattern when the position of the pupil cannot be detected by the position detection unit (22b) .

## Description

### BACKGROUND OF THE INVENTION

### 1. Field of the Invention

The present invention relates to a detection system.

### 2. Description of the Related Art

As a conventional detection system, for example, Japanese Patent Application Laid-open No. 2008-123137 discloses an in-vehicle image processing system detecting a direction of the driver's line of sight. The in-vehicle image processing system is equipped with a first and a second LED irradiation devices applying light toward the driver's face. The in-vehicle image processing system captures images of the driver's face by alternately turning on the first LED irradiation device and the second LED irradiation device, and extracts pixels with low luminance in the captured image to create an image. The in-vehicle image processing system detects the direction of the driver's line of sight after reducing the influence of reflected light reflected on the driver's eyeglasses with high luminance.

The in-vehicle image processing device disclosed in the Japanese Patent Application Laid-open No. 2008-123137 described above may not be able to extract pixels with low luminance even when the first LED irradiation device and the second LED irradiation device are alternately turned on, for example. In this case, the reflected light from the eyeglasses may appear in the captured image and the direction of the driver's line of sight may not be detected. In this respect, the structure has room for further improvement.

### SUMMARY OF THE INVENTION

The present invention has been made in view of the above problem. An object of the present invention is to provide a detection system capable of properly detecting the position of a detection target in the eyes of an occupant.

In order to achieve the above mentioned object, a detection system according to one aspect of the present invention includes a light irradiation unit that includes a plurality of light emitting elements, each of the light emitting elements applying light toward a different part of an occupant's face in a vehicle; an imaging unit that captures an image with reflected light of light applied to the occupant's face; a position detection unit that detects a position of a detection target in an eye of the occupant based on the image captured by the imaging unit; and an operation controller configured to control the light irradiation unit based on a detection result of the position detection unit, wherein the light irradiation unit applies light from the light emitting elements with a light emission pattern selected from a plurality of predetermined light emission patterns, the light emission patterns differ from each other in combination of the light emitting elements that emit light and the light emitting elements that do not emit light in the light emitting elements, and the operation controller controls the light irradiation unit to detect the position of the detection target by applying light from the light emitting elements that emit light with a light emission pattern different from a current light emission pattern, when the position of the detection target is not able to be detected by the position detection unit.

According to another aspect of the present invention, in the detection system, it is preferable to further include an eyeglass-wearing determination unit that determines whether the occupant wears eyeglasses based on the image captured by the imaging unit, wherein the operation controller controls the light irradiation unit to detect the position of the detection target by applying light from the light emitting elements that emit light with a light emission pattern different from the current light emitting pattern, when the eyeglass-wearing determination unit determines that the occupant wears the eyeglasses and the position of the detection target is not able to be detected by the position detection unit.

According to still another aspect of the present invention, in the detection system, it is preferable that some of the light emitting elements are arranged on one side of the imaging unit in a vehicle width direction of the vehicle and other light emitting elements are arranged on another side of the imaging unit in the vehicle width direction, and the light emitting elements that emit light are located on both sides of the imaging unit in the vehicle width direction, in each of the light emission patterns of the light irradiation unit.

According to still another aspect of the present invention, in the detection system, it is preferable to further include an orientation detection unit that detects an orientation of the occupant's face, wherein the operation controller controls the light irradiation unit to apply light from the light emitting elements that emit light with a light emission pattern selected based on the orientation of the occupant's face detected by the orientation detection unit.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a schematic diagram illustrating a configuration example of a detection system according to an embodiment;
FIG. 2 is a block diagram illustrating a configuration example of the detection system according to the embodiment;
FIG. 3 is a perspective view of a configuration example of a camera unit according to the embodiment;
FIG. 4 is a diagram illustrating arrangement relation between a pupil and LEDs according to the embodiment;
FIG. 5 is a diagram illustrating an example of lens-reflected light superimposed on a pupil according to the embodiment;
FIG. 6 is a diagram illustrating an example of lens-reflected light not superimposed on a pupil according to the embodiment; and
FIG. 7 is a flowchart illustrating an example of operations of the detection system according to the embodiment.

### DETAILED DESCRIPTION OF THE PREFERRED EMBODIMENTS

A mode (embodiment) to carry out the present invention will be explained hereinafter in detail with reference to the drawings. The present invention is not limited to details described in the following embodiment. The constituent elements described hereinafter include those that the skilled person could easily conceive and/or substantially the same elements. Furthermore, the configurations described below can be combined as appropriate. Various omissions, substitutions, or modifications of the configuration can be made without departing from the gist of the invention.

### Embodiment

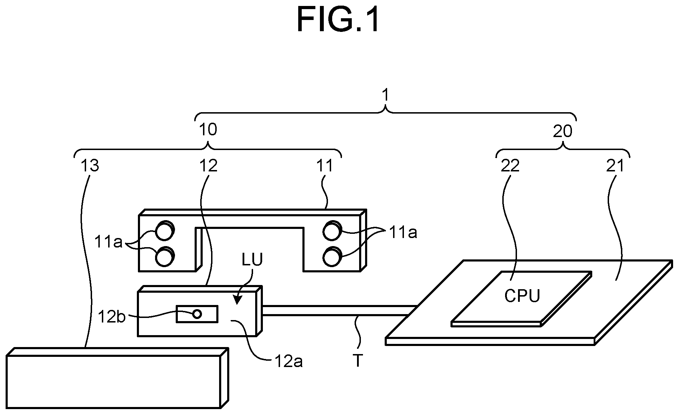

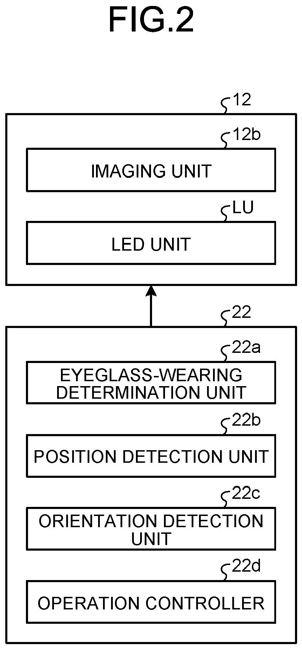

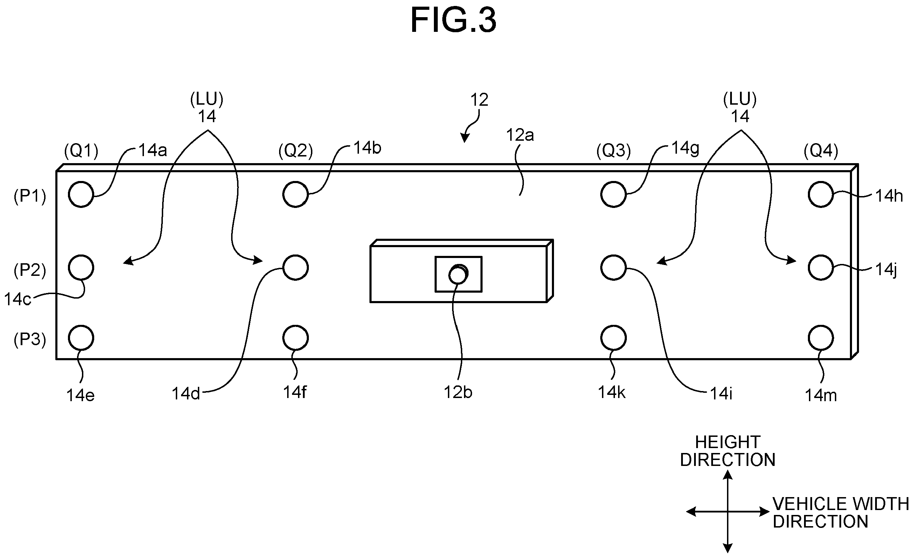

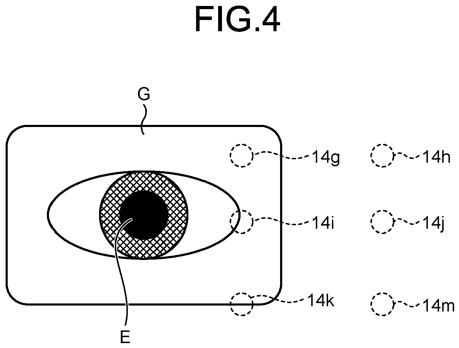

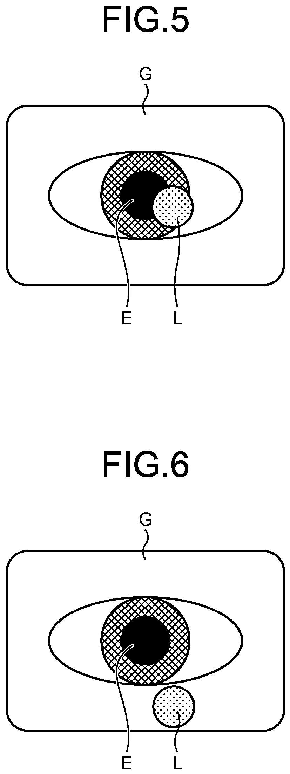

A detection system 1 according to an embodiment will be described with reference to the drawings. FIG. 1 is a schematic diagram illustrating a configuration example of a detection system 1 according to an embodiment. FIG. 2 is a block diagram illustrating a configuration example of the detection system 1 according to the embodiment. FIG. 3 is a perspective view of a configuration example of a camera unit 12 according to the embodiment. FIG. 4 is a diagram illustrating arrangement relation between a pupil E and LEDs 14 according to the embodiment. FIG. 5 is a diagram illustrating an example of lens-reflected light L superimposed on a pupil E according to the embodiment. FIG. 6 is a diagram illustrating an example of lens-reflected light L not superimposed on a pupil E according to the embodiment.

The detection system 1 is mounted on a vehicle and detects the position of a detection target in the eye of the occupant of the vehicle. The occupant is, for example, a driver driving the vehicle. The detection target in the driver's eye is, for example, the pupil E. The detection system 1 outputs information of the detected position of the driver's pupil E to an estimation device (not illustrated) estimating the driver's drowsiness, fatigue, etc. The following is a detailed description of the detection system 1.

The "height direction" used in the following explanation means the direction along the height direction of the vehicle, typically along the vertical direction. The "vehicle width direction" means the direction along the width direction of the vehicle. The height and vehicle width directions intersect each other and are typically orthogonal.

The detection system 1 includes, for example, a camera device 10 and a control device 20, as illustrated in FIG. 1.

The camera device 10 applies light to the driver's face and captures an image including the driver's eyes. The camera device 10 is installed at a position where it is possible to capture an image of the driver's face, for example, on an instrument panel, dashboard, steering column, etc. The camera device 10 includes a housing 11, a camera unit 12, and an optical filter 13.

The housing 11 houses the camera unit 12. The housing 11 is formed in a frame shape using synthetic resin or other material and surrounds part of the outer circumference of the camera unit 12. The housing 11 is provided with a plurality of light emitting parts 11a. The light emitting parts 11a are arranged on both sides of the camera unit 12 in the vehicle width direction and apply light toward the contour part of the driver's face.

The camera unit 12 applies light in the vicinity of the driver's eyes to capture images including the driver's eyes. The camera unit 12 includes a camera substrate 12a, an imaging unit 12b, and a light emitting diode (LED) unit LU as a light irradiation unit.

The camera substrate 12a is a so-called printed circuit board (Printed Circuit Board) on which various electronic components are mounted and constituting an electronic circuit electrically connecting the electronic components. On the camera substrate 12a, for example, a wiring pattern (printed pattern) is formed (printed) by a conductive member, such as copper foil, in an insulating layer formed of an insulating material, such as epoxy resin, glass epoxy resin, paper epoxy resin, and ceramic. The camera substrate 12a is, for example, multilayered (i.e., a multilayer substrate) by stacking a plurality of insulating layers provided with wiring patterns. The camera substrate 12a is formed in a rectangular shape and is equipped with the imaging unit 12b and the LED unit LU that are electrically connected to the camera substrate 12a.

The imaging unit 12b captures still images or moving images (hereinafter simply referred to as "images"). The imaging unit 12b is, for example, a near-infrared camera and is mounted approximately in the center of the camera substrate 12a. The imaging unit 12b is positioned with a camera lens facing the driver's face and captures an image of the driver's face. The imaging unit 12b captures an image of the driver's face by, for example, receiving reflected light of the light applied to the driver's face by the LED unit LU. The imaging unit 12b is activated when the vehicle's accessory (ACC) or ignition (IG) power is turned on, and captures images of the driver's face until these power sources are turned off. The imaging unit 12b is connected to the control device 20 via the camera substrate 12a or the like, and outputs the captured image of the driver's face to the control device 20.

The LED unit LU applies light. The LED unit LU applies, for example, near-infrared rays under the control of the control device 20. The LED unit LU includes a plurality of LEDs 14 as a plurality of light emitting elements, as illustrated in FIG. 3. The LEDs 14 are mounted on the camera substrate 12a, each spaced apart on the camera substrate 12a. Among the LEDs 14, some LEDs 14 are arranged on one side of the imaging unit 12b in the vehicle width direction, and the other LEDs 14 are arranged on the other side of the imaging unit 12b in the vehicle width direction. In this example, the same number of LEDs 14 are arranged on one side and the other side of the imaging unit 12b in the vehicle width direction. Specifically, six LEDs 14a to 14f are arranged on one side of the imaging unit 12b and six LEDs 14g to 14m are arranged on the other side of the imaging unit 12b in the vehicle width direction. Twelve LEDs 14a to 14m are arranged in total.

The twelve LEDs 14a to 14m are arranged in three rows P1 to P3 along the vehicle width direction and four columns Q1 to Q4 along the height direction, each spaced apart in the vehicle width direction and the height direction. For example, the six LEDs 14a to 14f on one side of the imaging unit 12b are arranged in the three rows P1-P3 along the vehicle width direction and the two columns Q1 and Q2 along the height direction, each spaced apart in the vehicle width direction and the height direction. In the same manner, the six LEDs 14g to 14m on the other side of the imaging unit 12b are arranged in the three rows P1 to P3 along the vehicle width direction and the two columns Q3 and Q4 along the height direction, each spaced apart in the vehicle width direction and the height direction.

The optical axes of the twelve LEDs 14a to 14m, for example, are parallel with one another. Each of the twelve LEDs 14a to 14m applies light toward a different part of the vehicle driver's face, as illustrated in FIG. 4. FIG. 4 illustrates the irradiation points on the driver's face to which the six LEDs 14g to 14m apply light. For example, LEDs 14g, 14i, and 14k in the column Q3 apply light to the outer side (ear side) of one eye, and LEDs 14h, 14j, and 14m in the column Q4 apply light to further out (ear side) of the one eye than the irradiation points of the LEDs 14g, 14i, and 14k in the column Q3. Although not illustrated in the drawing, the six LEDs 14a to 14f also apply light to the driver's face in the same manner as the six LEDs 14g to 14m described above. The LED unit LU applies light from the LEDs 14 (14a to 14m) with a light emission pattern selected from a plurality of predetermined light emission patterns. The light emission patterns are described below.

An optical filter 13 transmits light of a specific wavelength. The optical filter 13 is provided on the front side of the imaging unit 12b and transmits light of a specific wavelength made incident on the imaging unit 12b.

The control device 20 controls the camera unit 12. The control device 20 includes a control board 21 and a CPU 22.

The control board 21 is a printed circuit board on which various electronic components are mounted and constituting an electronic circuit electrically connecting the electronic components. The control board 21 has a wiring pattern formed by a conductive member, such as copper foil, in an insulating layer formed of an insulating material, such as epoxy resin, glass epoxy resin, paper epoxy resin, and ceramic. The control board 21 is, for example, multilayered by stacking a plurality of insulating layers with wiring patterns (i.e., a multilayer substrate). The control board 21 is equipped with the CPU 22, and the CPU 22 is electrically connected to the control board 21. The control board 21 is connected to the camera unit 12 via a communication line T.

The CPU 22 controls the camera unit 12. The CPU 22 includes an eyeglass-wearing determination unit 22a, a position detection unit 22b, an orientation detection unit 22c, and an operation controller 22d, and these functions are mounted on a single IC (Integrated Circuit). The eyeglass-wearing determination unit 22a, the position detection unit 22b, the orientation detection unit 22c, and the operation controller 22d constitute face recognition middleware.

The eyeglass-wearing determination unit 22a determines whether the driver wears eyeglasses G. The eyeglass-wearing determination unit 22a determines whether the driver wears eyeglasses G by well-known image processing, such as image pattern matching. The eyeglass-wearing determination unit 22a compares, for example, the predetermined image of eyeglasses G with the driver's face image captured by the imaging unit 12b, and detects the image of eyeglasses G in the driver's face image. When the eyeglass-wearing determination unit 22a succeeds in detecting the image of eyeglasses G in the driver's face image, the eyeglass-wearing determination unit 22a determines that the driver wears eyeglasses G. On the other hand, when the eyeglass-wearing determination unit 22a fails to detect the image of eyeglasses G in the driver's face image, the eyeglass-wearing determination unit 22a determines that the driver is not wearing eyeglasses G. The eyeglass-wearing determination unit 22a is connected to the operation controller 22d and outputs information indicating the determination result to the operation controller 22d.

The position detection unit 22b detects the position of the pupil E in each eye of the driver. The position detection unit 22b detects the position of the driver's pupil E using well-known image processing, such as image pattern matching. The position detection unit 22b compares, for example, a predetermined eye image with the driver's face image captured by the imaging unit 12b, and detects the position of the pupil E of the driver's eye in the driver's face image. The position detection unit 22b is connected to the operation controller 22d and outputs information indicating the detection result to the operation controller 22d. For example, when the position detection unit 22b succeeds in detecting the position of the driver's pupil E in the driver's face image, the position detection unit 22b outputs a detection result indicating that it has succeeded in detecting the pupil E to the operation controller 22d On the other hand, as illustrated in FIG. 5, when the light emitted from the LED unit LU is reflected off the lens of the eyeglasses G, the lens-reflected light L is superimposed on the pupil E, and the position of the driver's pupil E cannot be detected in the driver's face image, the position detection unit 22b outputs a detection result indicating that it has failed to detect the pupil E to the operation controller 22d.

The orientation detection unit 22c detects the orientation of the driver's face. The orientation detection unit 22c detects the orientation of the driver's face using well-known image processing, such as image pattern matching. The orientation detection unit 22c detects the orientation of the driver's face on the basis of, for example, a predetermined reference image for determining the orientation of a human face. The reference image herein is an image acquired by extracting the feature amounts of respective faces facing front, left, right, up, and down. The orientation detection unit 22c compares the reference image with the driver's face image captured by the imaging unit 12b to determine the orientation of the driver's face image. The orientation detection unit 22c determines, for example, the orientation of the driver's face image as front, left, right, up, or down. The orientation detection unit 22c is connected to the operation controller 22d and outputs the determination result indicating the orientation of the driver's face to the operation controller 22d.

The operation controller 22d controls the LED unit LU. The operation controller 22d controls the LED unit LU on the basis of, for example, a plurality of light emission patterns. The light emission patterns are stored in advance in a storage unit (not illustrated). The light emission patterns differ from each other in the combination of the LEDs 14 including the LEDs 14 that emit light and the LEDs 14 that do not emit light.

For example, the light emission patterns include a pattern in which the LEDs 14 that emit light are located on both sides of the imaging unit 12b in the vehicle width direction. In other words, the light emission patterns include a pattern including the LEDs 14 that emit light and that are symmetric with respect to a line (axis of symmetry) extending along the height direction and through the imaging unit 12b. In this example, the light emission patterns include first to sixth light emission patterns. Specifically, the first light emission pattern is a pattern including the LEDs 14d and 14i that emit light and located in the columns Q2 and Q3 of the row P2 in FIG. 3, the second light emission pattern is a pattern including the LEDs 14c and 14j that emit light and located in the columns Q1 and Q4 of the row P2, the third light emission pattern is a pattern including the LEDs 14b and 14g that emit light and located in the columns Q2 and Q3 of the row PI, the fourth light emission pattern is a pattern including the LEDs 14a and 14h that emit light and located in the columns Q1 and Q4 of the row PI, the fifth light emission pattern is a pattern including the LEDs 14f and 14k that emit light and located in the columns Q2 and Q3 of the row P3, and the sixth light emission pattern is a pattern including the LEDs 14e and 14m that emit light and located in the columns Q1 and Q4 of the row P3. The operation controller 22d turns on the LEDs 14 on the basis of the first to the sixth light emission patterns described above.

The operation controller 22d is connected to the eyeglass-wearing determination unit 22a, and the eyeglass-wearing determination unit 22a outputs a determination result indicating whether the driver wears eyeglasses G. The operation controller 22d is connected to the position detection unit 22b, and the position detection unit 22b outputs a detection result indicating whether the pupil E has been detected. The operation controller 22d is connected to the orientation detection unit 22c, and the orientation detection unit 22c outputs a determination result representing the orientation of the driver's face.

The operation controller 22d controls the LED unit LU on the basis of the determination results of the eyeglass-wearing determination unit 22a, the position detection unit 22b, and the orientation detection unit 22c. For example, when the eyeglass-wearing determination unit 22a determines that the driver wears eyeglasses G and the position of the pupil E can be detected by the position detection unit 22b, the operation controller 22d controls the LEDs 14 to continuously apply light with the current light emission pattern to detect the position of the pupil E.

On the other hand, when the eyeglass-wearing determination unit 22a determines that the driver wears eyeglasses G and the position of the pupil E cannot be detected by the position detection unit 22b, the operation controller 22d controls the LED unit LU to apply light from the specific LEDs 14 with a light emission pattern different from the current light emission pattern to detect the position of the pupil E. In this operation, the operation controller 22d selects the light emission pattern corresponding to the orientation of the driver's face from the light emission patterns on the basis of the orientation of the driver's face detected by the orientation detection unit 22c. The operation controller 22d turns on the LEDs 14 in the row P1 on the upper side in the height direction (third or fourth light emission pattern), for example, when the orientation of the driver's face detected by the orientation detection unit 22c is a downward orientation. On the other hand, the operation controller 22d turns on the LEDs 14 in the row P3 on the lower side in the height direction (fifth or sixth light emission pattern) when the orientation of the driver's face detected by the orientation detection unit 22c is an upward orientation.

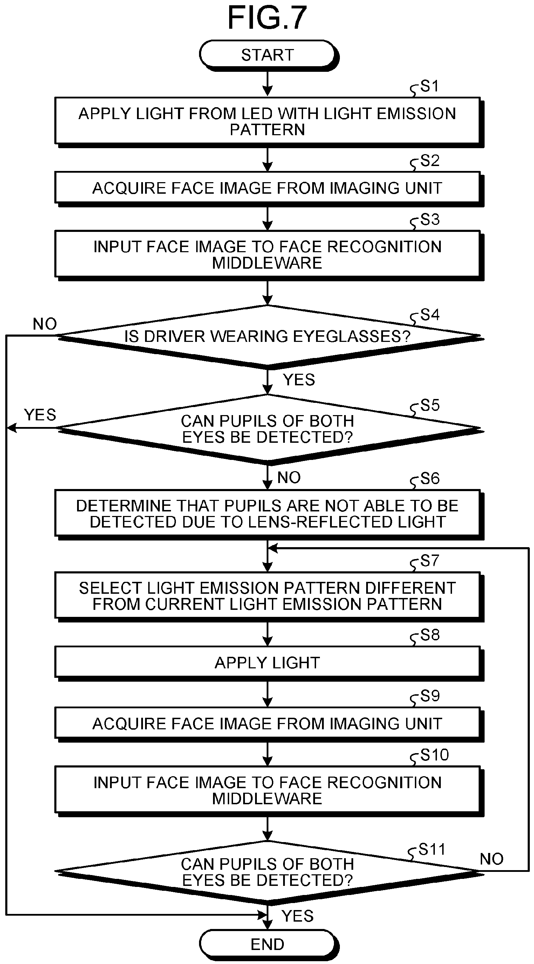

The following is an explanation of an example of operations of the detection system 1. FIG. 7 is a flowchart illustrating an example of operations of the detection system 1 according to the embodiment. In the detection system 1, the operation controller 22d applies light from the LEDs 14 with a light emission pattern selected from the light emission patterns (Step S1), as illustrated in FIG. 7. The operation controller 22d selects, for example, the first light emission pattern from the light emission patterns to apply light from the LEDs 14d and 14i. The imaging unit 12b receives and captures an image of reflected light of the light applied from the LEDs 14d and 14i to the driver's face, and outputs the captured image of the driver's face to the CPU 22. The CPU 22 acquires the driver's face image from the imaging unit 12b (Step S2). Thereafter, the CPU 22 inputs the driver's face image to the face recognition middleware (Step S3). The CPU 22 inputs the driver's face image to, for example, the eyeglass-wearing determination unit 22a, the position detection unit 22b, and the orientation detection unit 22c forming the face recognition middleware.

The eyeglass-wearing determination unit 22a determines whether the driver wears eyeglasses G (Step S4). The eyeglass-wearing determination unit 22a determines whether the driver wears eyeglasses G using well-known image processing, such as image pattern matching. When the eyeglass-wearing determination unit 22a determines that the driver wears eyeglasses G (Yes at Step S4), the operation controller 22d determines whether the pupils E of both eyes of the driver can be detected by the position detection unit 22b (Step S5). The position detection unit 22b detects the positions of the driver's pupils E using well-known image processing, such as image pattern matching. When the operation controller 22d determines that the pupils E of both eyes of the driver can be detected by the position detection unit 22b (Yes at Step S5), the operation controller 22d finishes the process of detecting the pupils E. On the other hand, when the operation controller 22d determines that the pupils E of both eyes of the driver cannot be detected by the position detection unit 22b (No at Step S5), the operation controller 22d determines that the pupils E cannot be detected due to the lens-reflected light L (Step S6).

Thereafter, the operation controller 22d selects a light emission pattern different from the current light emission pattern (Step S7). In this operation, the operation controller 22d selects a light emission pattern on the basis of the determination result indicating the orientation of the driver's face output from the orientation detection unit 22c. The operation controller 22d selects, for example, the third light emission pattern to turn on the LEDs 14 in the row P1 on the upper side in the height direction when the driver's face orientation detected by the orientation detection unit 22c is a downward orientation.

Thereafter, the operation controller 22d applies light from the LEDs 14 to the driver's face with the selected light emission pattern (Step S8). The operation controller 22d applies light to the driver's face from the LEDs 14b and 14g with the selected third light emission pattern, for example. The light applied by the LEDs 14b and 14g to the driver's face is reflected off the driver's face. The imaging unit 12b receives the reflected light, captures an image, and outputs the captured image of the driver's face to the CPU 22. The CPU 22 acquires the driver's face image from the imaging unit 12b (Step S9). Thereafter, the CPU 22 inputs the driver's face image to the face recognition middleware (Step S10). The CPU 22 inputs the driver's face image to, for example, the position detection unit 22b forming the face recognition middleware. The operation controller 22d determines whether the pupils E of both eyes of the driver can be detected by the position detection unit 22b (Step S11). When the operation controller 22d determines that the pupils E of both eyes of the driver can be detected by the position detection unit 22b (Yes at Step S11), the operation controller 22d finishes the process of detecting the pupils E. On the other hand, when the operation controller 22d determines that the pupils E of both eyes of the driver cannot be detected by the position detection unit 22b (No at Step S11), the operation controller 22d returns to Step S7 to select a light emission pattern different from the current light emission pattern. The operation controller 22d repeats the above process from Step S7 to Step S11 until the pupils E of both eyes of the driver can be detected by the position detection unit 22b. When the operation controller 22d has once detected the pupils E of both eyes of the driver with the position detection unit 22b but cannot detect the pupils E of both eyes of the driver due to a change in the orientation of the driver's face, the operation controller 22d executes the process to detect the pupils E of both eyes of the driver again.

As described above, the detection system 1 according to the embodiment includes the LED unit LU, the imaging unit 12b, the position detection unit 22b, and the operation controller 22d. The LED unit LU includes a plurality of LEDs 14, and each of the LEDs 14 applies light toward a different part of the occupant's face in the vehicle. The imaging unit 12b captures an image by reflected light of light applied to the occupant's face. The position detection unit 22b detects the position of the pupil E in the occupant's eye on the basis of the image captured by the imaging unit 12b. The operation controller 22d controls the LED unit LU on the basis of the detection results of the position detection unit 22b. The LED unit LU applies light from the LEDs 14 with a light emission pattern selected from a plurality of predetermined light emission patterns. The light emission patterns differ from each other in the combination of the LEDs 14 that emit light and the LEDs 14 that do not emit light in the LEDs 14. When the position of pupil E cannot be detected by the position detection unit 22b, the operation controller 22d controls the LED unit LU to detect the position of pupil E by applying light from the LEDs 14 that emit light with a light emission pattern different from the current light emission pattern.

This structure enables the detection system 1 to suppress the superposition of the pupil E and the lens-reflected light L of the eyeglasses G because light is applied from the LEDs 14 with a different light emission pattern when the position of the pupil E in the driver's eye cannot be detected by the lens-reflected light L of the eyeglasses G. The detection system 1 can capture the driver's face image while maintaining the light quantity of the LEDs 14. This structure eliminates the necessity of increasing the number of LEDs 14 or increasing the intensity of the radiation. This structure eliminates the need of a heat exhaust device for exhausting heat in the detection system 1, suppressing increase in size of the system and increase in manufacturing costs that would otherwise occur due to the installation of the heat exhaust device. With this structure, the detection system 1 is enabled to properly detect the position of the driver's pupil E.

The detection system 1 described above further includes the eyeglass-wearing determination unit 22a determining whether the occupant is wearing eyeglasses G on the basis of an image captured by the imaging unit 12b. When the eyeglass-wearing determination unit 22a determines that the occupant is wearing eyeglasses G and the position of the pupil E cannot be detected by the position detection unit 22b, the operation controller 22d controls the LED unit LU to detect the position of the pupil E by applying light from the LEDs 14 that emit light with a light emission pattern different from the current light emission pattern. This structure enables the detection system 1 to properly detect the position of the driver's pupil E even when the driver wears eyeglasses G.

In the detection system 1 described above, some LEDs 14 in the LEDs 14 are arranged on one side of the imaging unit 12b in the vehicle width direction and the other LEDs 14 in the LEDs 14 are arranged on the other side of the imaging unit 12b in the vehicle width direction. In each of light emission patterns of the LED unit LU, the LEDs 14 that emit light are located on both sides of the imaging unit 12b in the vehicle width direction. This structure enables the detection system 1 to apply light in the vicinity of both eyes of the driver. This structure enables the detection system 1 to properly detect the positions of the pupils E in both eyes of the driver.

The above detection system 1 further includes the orientation detection unit 22c detecting the orientation of the occupant's face. The operation controller 22d applies light from the LEDs 14 that emit light in a light emission pattern selected on the basis of the orientation of the occupant's face detected by the orientation detection unit 22c. This structure enables the detection system 1 to select a light emission pattern that is less likely to generate the lens-reflected light L of the glasses G on the basis of the orientation of the driver's face. This structure enables the detection system 1 to detect the position of the driver's pupil E more quickly.

### Modification

The following is an explanation of a modification of the embodiment. In the modification, the same reference numerals are assigned to the constituent elements that are equivalent to those in the embodiment, and their detailed explanations are omitted. The example described above illustrates the camera device 10 being installed on the instrument panel, dashboard, steering column, etc., but the structure is not limited thereto. The camera device 10 may be installed in other locations as long as it is possible to capture the driver's face image.

The example described above illustrates the imaging unit 12b being a near-infrared camera, but the imaging unit 12b is not limited thereto. The imaging unit 12b may be a camera of any other types.

The example described above illustrates the LED unit LU applying near-infrared light, but the structure is not limited thereto. The LED unit LU may apply other types of light.

The example described above illustrates the LED unit LU including 12 LEDs 14a to 14m, but the number of LEDs is not limited thereto. The number may be another number.

The example described above illustrates the twelve LEDs 14a to 14m arranged in three rows P1 to P3 along the vehicle width direction and four columns Q1 to Q4 along the height direction, but the arrangement is not limited thereto. Any other arrangements may be adopted.

The example described above illustrates the CPU 22 including an eyeglass-wearing determination unit 22a and an orientation detection unit 22c, but the structure is not limited thereto. The CPU 22 may include no eyeglass-wearing determination unit 22a or orientation detection unit 22c.

The operation controller 22d may turn on the LEDs 14 in the columns Q3 and Q4 on the side opposite to the orientation of the face when the orientation of the driver's face detected by the orientation detection unit 22c is the left orientation. When the orientation of the driver's face detected by the orientation detection unit 22c is the right orientation, the operation controller 22d may turn on the LEDs 14 in the columns Q1 and Q2 on the side opposite to the face orientation.

The example described above illustrates that the position detection unit 22b detects the position of the pupil E in each of both eyes of the driver, the structure is not limited thereto. The position detection unit 22b may detect the position of the pupil E in one eye of the driver. In this case, the detection system 1 outputs the detected information on the position of the pupil E of one of the driver's eyes to an estimation device estimating the driver's drowsiness, fatigue, etc.

The example described above illustrates the twelve LEDs 14a to 14m having respective optical axes being parallel with one another, but the structure is not limited thereto. Their respective optical axes may intersect with one another.

The example described above illustrates that the light emission patterns are stored in the storage unit, but the structure is not limited thereto. The light emission patterns may be obtained from an external server.

The example described above illustrates that the CPU 22 includes an eyeglass-wearing determination unit 22a, a position detection unit 22b, an orientation detection unit 22c, and an operation controller 22d and these functions are mounted on a single IC, but the structure is not limited thereto. The above functions may be mounted on a plurality of separate ICs.

With the detection system according to the present embodiment, when the position of the detection target in the occupant's eye cannot be detected, light is applied from the light emitting element that emits light with a light emitting pattern different from the current light emitting pattern. This structure enables proper detection of the position of the detection target.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A detection system (1) comprising:
a light irradiation unit (LU) that includes a plurality of light emitting elements (14), each of the light emitting elements (14) applying light toward a different part of an occupant's face in a vehicle;
an imaging unit (12b) that captures an image with reflected light of light applied to the occupant's face;
a position detection unit (22b) that detects a position of a detection target (E) in an eye of the occupant based on the image captured by the imaging unit (12b); and
an operation controller (22d) configured to control the light irradiation unit (LU) based on a detection result of the position detection unit (22b), wherein
the light irradiation unit (LU) applies light from the light emitting elements (14) with a light emission pattern selected from a plurality of predetermined light emission patterns,
the light emission patterns differ from each other in combination of the light emitting elements (14) that emit light and the light emitting elements (14) that do not emit light in the light emitting elements (14), and
the operation controller (22d) controls the light irradiation unit (LU) to detect the position of the detection target (E) by applying light from the light emitting elements (14) that emit light with a light emission pattern different from a current light emission pattern, when the position of the detection target (E) is not able to be detected by the position detection unit (22b) .

2. The detection system (1) according to claim 1, further comprising:
an eyeglass-wearing determination unit (22a) that determines whether the occupant wears eyeglasses based on the image captured by the imaging unit (12b), wherein
the operation controller (22d) controls the light irradiation unit (LU) to detect the position of the detection target (E) by applying light from the light emitting elements (14) that emit light with a light emission pattern different from the current light emitting pattern, when the eyeglass-wearing determination unit (22a) determines that the occupant wears the eyeglasses and the position of the detection target (E) is not able to be detected by the position detection unit (22b).

3. The detection system (1) according to claim 1 or 2, wherein
some of the light emitting elements (14) are arranged on one side of the imaging unit (12b) in a vehicle width direction of the vehicle and other light emitting elements (14) are arranged on another side of the imaging unit (12b) in the vehicle width direction, and
the light emitting elements (14) that emit light are located on both sides of the imaging unit (12b) in the vehicle width direction, in each of the light emission patterns of the light irradiation unit (LU).

4. The detection system (1) according to any one of claims 1 to 3, further comprising:
an orientation detection unit (22c) that detects an orientation of the occupant's face, wherein
the operation controller (22d) controls the light irradiation unit (LU) to apply light from the light emitting elements (14) that emit light with a light emission pattern selected based on the orientation of the occupant's face detected by the orientation detection unit (22c) .
